(19) Europäisches Patentamt
European Patent Office
Office européen des brevets

(11) **EP 1 487 219 A1**

(12) **EUROPEAN PATENT APPLICATION**
published in accordance with Art. 158(3) EPC

(43) Date of publication:
**15.12.2004 Bulletin 2004/51**

(51) Int Cl.⁷: **H04N 9/07**

(21) Application number: **03744502.0**

(86) International application number:
**PCT/JP2003/002101**

(22) Date of filing: **26.02.2003**

(87) International publication number:
**WO 2003/079696 (25.09.2003 Gazette 2003/39)**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **20.03.2002 JP 2002078854**

(71) Applicant: **Sony Corporation
Tokyo 141-0001 (JP)**

(72) Inventors:
• **MIZUKURA, Takami; c/o SONY CORPORATION
Shinagawa-ku, Tokyo 141-0001 (JP)**
• **KATOH, Naoya; c/o SONY CORPORATION
Shinagawa-ku, Tokyo 141-0001 (JP)**
• **NAKAJIMA, Ken; c/o SONY CORPORATION
Shinagawa-ku, Tokyo 141-0001 (JP)**
• **NAGAHAMA, Hiroki; c/o SONY CORPORATION
Shinagawa-ku, Tokyo 141-0001 (JP)**

(74) Representative: **Horner, David Richard
D Young & Co
120 Holborn
London EC1N 2DY (GB)**

(54) **IMAGE PROCESSING DEVICE, IMAGE PROCESSING METHOD, AND IMAGE PROCESSING DEVICE MANUFACTURING METHOD**

(57) The present invention relates to an image processing apparatus and method in which more faithful colors are reproduced and noise is reduced, and to a method of manufacturing the image processing apparatus. A four-color color filter 61 is formed of a total of four filters, that is, an R filter that allows only red light to pass through, a B filter that allows only blue light to pass through, and a G1 filter that allows only green light in a first wavelength band to pass through, and a G2 filter, having a high correlation with the G1 filter, that allows only green light in a second wavelength band to pass through, the four filters defining a minimum unit. The G1 filter and the G2 filter are arranged at mutually diagonal positions within the minimum unit. RGB signals are generated in accordance with four kinds of signals which are transmitted through the four-color color filter 61 and which are obtained by an image sensor. The present invention can be applied to an image processing apparatus such as a digital camera.

## FIG. 9

61

**Description**

Technical Field

The present invention relates to an image processing apparatus and method, and a method of manufacturing the image processing apparatus. More particularly, the present invention relates to an image processing apparatus and method in which more faithful colors are reproduced and noise is reduced, and to a method of manufacturing the image processing apparatus.

Background Art

In recent years, image processing apparatuses (digital cameras, color scanners, etc.) intended for consumers, and image processing software have come into wide use, and the number of users who edit, by themselves, images obtained by, for example, taking pictures has increased.

Along with this situation, there has also been a very strong demand for high quality images (demand for better color, demand for reduction in noise, etc.). The current situation is that more than half of users cite good image quality as a first condition when purchasing a digital camera, and the like.

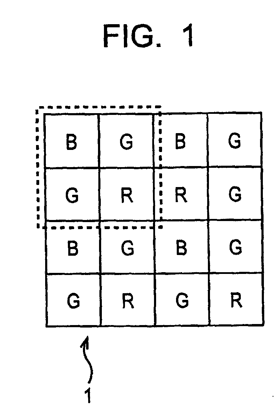

In a digital camera, generally, a color filter 1 of the three primary colors RGB, shown in Fig. 1, is used. In this example, as indicated by the short dashed line of Fig. 1, the color filter 1 is formed in the so-called Bayer layout, in which a total of four filters, that is, two G filters that allow only green (G) light to pass through, one R filter that allows only red (R) light to pass through, and one B filter that allows only blue (B) light to pass through, define a minimum unit.

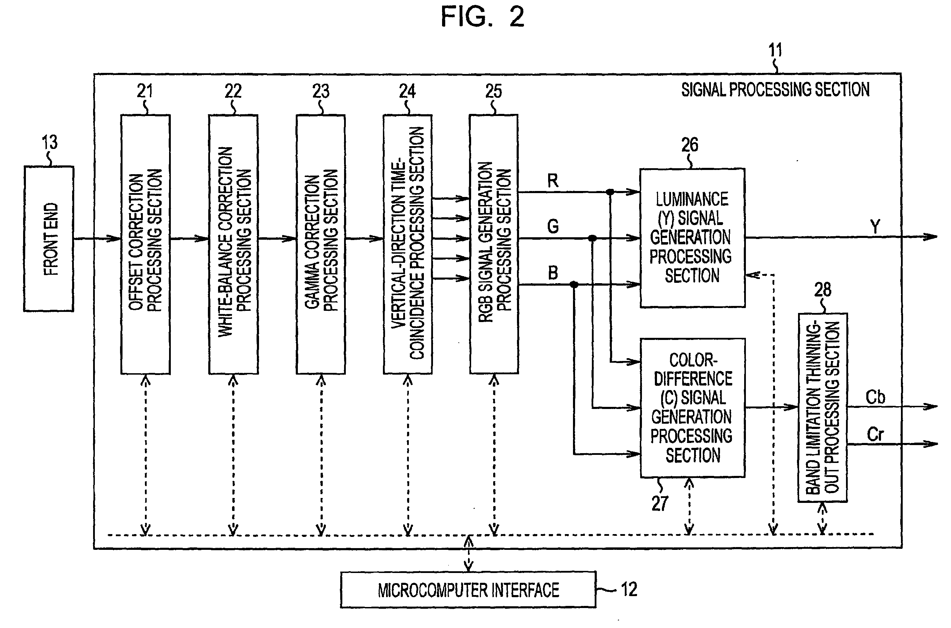

Fig. 2 is a block diagram showing an example of the configuration of a signal processing section 11 for performing various processing on RGB signals obtained by a CCD (Charge Coupled Device) imaging device having the RGB color filter 1.

An offset correction processing section 21 removes offset components contained in an image signal supplied from a front end 13 for performing a predetermined process on a signal obtained by the CCD imaging device, and outputs the obtained image signal to a white-balance correction processing section 22. The white-balance correction processing section 22 corrects the balance of each color on the basis of the color temperature of the image signal supplied from the offset correction processing section 21 and the difference in the sensitivity of each filter of the color filter 1. The color signal obtained as a result of a correction being made by the white-balance correction processing section 22 is output to a gamma correction processing section 23. The gamma correction processing section 23 makes gamma correction on the signal supplied from the white-balance correction processing section 22, and outputs the obtained signal to a vertical-direction time-coincidence processing section 24. The vertical-direction time-coincidence processing section 24 is provided with a delay device, so that signals having vertical deviations in time, which are supplied from the gamma correction processing section 23, are made time coincident.

An RGB signal generation processing section 25 performs an interpolation process for interpolating the color signal supplied from the vertical-direction time-coincidence processing section 24 in the phase of the same space, a noise removal process for removing noise components of the signal, a filtering process for limiting the signal band, and a high-frequency correction process for correcting high-frequency components of the signal band, and outputs the obtained RGB signals to a luminance signal generation processing section 26 and a color-difference signal generation processing section 27.

The luminance signal generation processing section 26 combines the RGB signals supplied from the RGB signal generation processing section 25 at a predetermined combination ratio in order to generate a luminance signal. The color-difference signal generation processing section 27 likewise combines the RGB signals supplied from the RGB signal generation processing section 25 at a predetermined combination ratio in order to generate color-difference signals (Cb, Cr). The luminance signal generated by the luminance signal generation processing section 26 and the color-difference signals generated by the color-difference signal generation processing section 27 are output to, for example, a monitor provided outside the signal processing section 11.

It is common practice that, in this manner, image processing is performed on the original signal by a linear transform after gamma processing is performed thereon.

As a condition for determining a color filter, firstly, "color reproduction characteristics" for reproducing a color faithful to how the color appears to the eyes of a human being is one example. These "color reproduction characteristics" are formed of an "appearance of color" meaning that the color is brought closer to a color which is seen by the eyes of a human being, and "color discrimination characteristics" (metamerism matching) meaning that colors which are seen as different by the eyes of a human being are reproduced as different colors and colors which are seen as the same are reproduced as the same color. Secondly, the satisfaction of "physical limitations" when producing a filter, such as the spectral components having positive sensitivity and spectral sensitivity characteristics having one peak, is another example. Thirdly, a consideration of "noise reduction characteristics" is a further example.

In order to produce and evaluate a color filter with importance placed on "color reproduction characteristics", hitherto, for example, a filter evaluation coefficient such as a q factor, a µ factor, or an FOM (Figure of Merit) has been used. These coefficients take a value of 0 to 1; the closer the spectral sensitivity characteristics of the color filter to a linear transform of the spectral sensitivity characteristics (color matching function) of the eyes of a human being, the greater value the coefficients take, that is, the coefficients indicate a value closer to 1. In order to make the values of these coefficients closer to 1, the spectral sensitivity is made to satisfy the Luther condition.

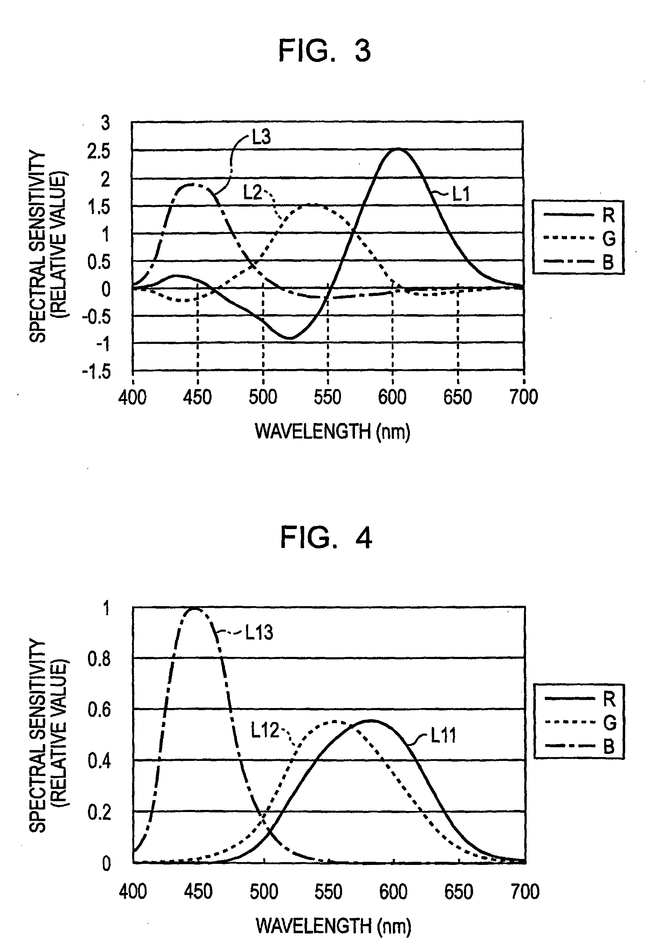

However, if the color filter is designed so as to satisfy the Luther condition, the color filter has negative spectral components or becomes such that a plurality of peak values occur, as shown in Fig. 3. For this reason, the color filter cannot be realized physically, or even if it can be realized, it can be realized only with a considerable difficulty.

Therefore, when the color filter is designed by considering the above-described "physical limitations" in addition to the Luther condition, the spectral sensitivity characteristics usually become characteristics, shown in Fig. 4, such that negative spectral components do not appear. A curve L1 of Fig. 3 and a curve L11 of Fig. 4 represent the spectral sensitivity of R. A curve L2 of Fig. 3 and a curve L12 of Fig. 4 represent the spectral sensitivity of G. A curve L3 of Fig. 3 and a curve L13 of Fig. 4 represent the spectral sensitivity of B.

However, in a filter having spectral sensitivity characteristics shown in Fig. 4, a problem arises in that the overlap of the spectral sensitivity characteristics of R (the curve L11) and the spectral sensitivity characteristics of G (the curve L12) is large, and when each color signal is separated (extracted), propagation noise increases. That is, in order to separate the color signal, the difference between the R signal and the G signal needs to be increased. However, when each signal is amplified to increase the difference, noise is also amplified as a consequence thereof, and the "noise reduction characteristics" described above are not satisfied.

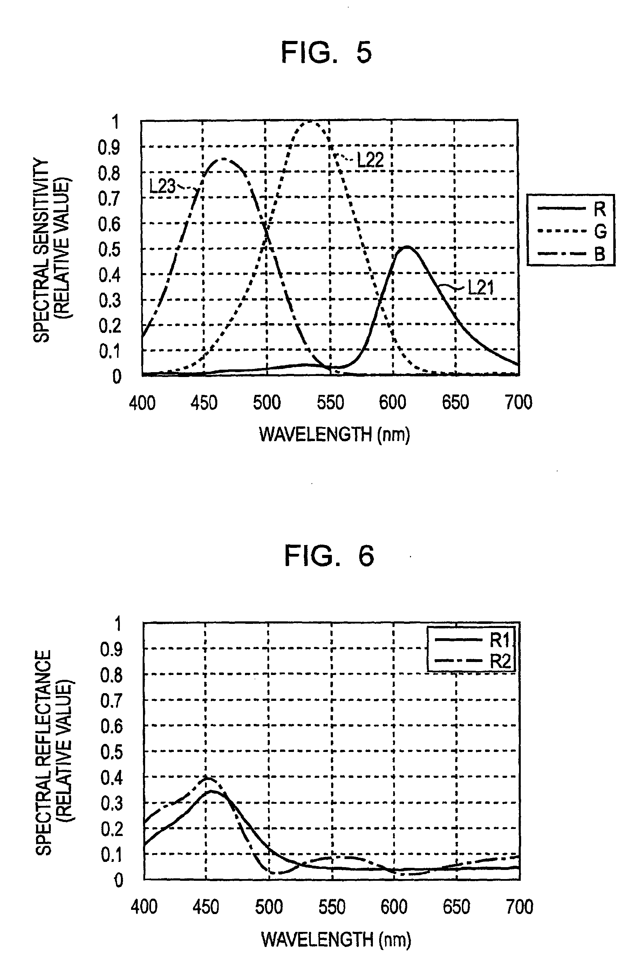

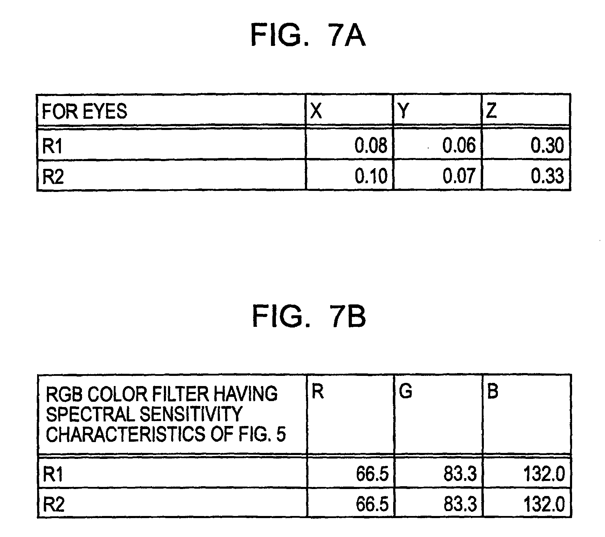

Therefore, in order that "noise reduction characteristics" be satisfied, it is considered that the portion where the spectral sensitivity characteristics of R overlap the spectral sensitivity characteristics of G is decreased even if the "color reproduction characteristics" is sacrificed somewhat, and, for example, the filter is made to have the spectral sensitivity characteristics shown in Fig. 5.

However, in the case of a filter having such characteristics, there is a problem in that, for example, so-called "color discrimination characteristics" are degraded, such as objects which are seen to the eyes as having different colors being photographed as the same color by a digital camera.

The degradation of the "color discrimination characteristics" are further described as follows. That is, Fig. 6 shows spectral reflectances of an object R1 and an object R2, in which the spectral reflectances of the object R1 and the object R2 differ. Figs. 7A and 7B show tristimulus values (X, Y, Z values) when the object R1 and the object R2 having a spectral reflectance of Fig. 6 are seen by the eyes of a standard observer (Fig. 7A), and show RGB values when a photograph is taken by a color filter having the spectral sensitivity characteristics of Fig. 5 (Fig. 7B).

In Fig. 7A, the X, Y, and Z values ("0.08", "0.06", "0.30") of the object R1 are different from the X, Y, and Z values ("0.10", "0.07", "0.33") of the object R2. This indicates that each object is seen as a different color by the eyes of a human being. In contrast, in Fig. 7B, the R, G, and B values of the object R1, and the R, G, and B values of the object R2 have the same values ("66.5", "88.3", "132.0"). This means that, in the digital camera (color filter) having the spectral sensitivity characteristics of Fig. 5, each object is photographed as having the same color, that is, without discriminating the colors.

Furthermore, in color filter evaluation by using a q factor, a µ factor, or an FOM, "noise reduction characteristics" are not considered, and the filter is not desirable from the viewpoint of "noise reduction characteristics". Nevertheless, the highest evaluation (the value of the coefficient is 1) is indicated with respect to a filter that satisfies both "color reproduction characteristics" and "physical limitations" (filter, shown in Fig. 4, that satisfies the Luther condition).

Disclosure of the Invention

The present invention has been made in view of such circumstances. The present invention aims to be capable of reproducing more faithful colors and reducing noise.

The image processing apparatus of the present invention includes: extraction means for extracting first to third light of the three primary colors, and fourth light having a high correlation with the second light among the first to third light of the three primary colors; conversion means for converting the first to fourth light extracted by the extraction means into corresponding first to fourth color signals; and signal generation means for generating fifth to seventh color signals corresponding to the three primary colors on the basis of the first to fourth color signals, wherein the signal generation means generates the fifth to seventh color signals on the basis of a conversion equation provided to minimize the difference, at a predetermined evaluation value, between a reference value computed in accordance with a predetermined color patch and an output value computed by spectral sensitivity characteristics of the extraction means in accordance with the color patch.

The extraction means for extracting the first to fourth light may have a unit composed of first to fourth extraction sections for extracting the first to fourth light, respectively, and the second extraction section and the fourth extraction section for extracting the second light and the fourth light, respectively, may be positioned diagonally at the unit.

The second extraction section and the fourth extraction section may have spectral sensitivity characteristics which closely resemble visible sensitivity characteristics of a luminance signal.

The first to third light of the three primary colors may be red, green, and blue light, respectively, and the fourth light may be green light.

The difference may be a difference in an XYZ color space.

The difference may be a difference in a uniform perceptual color space.

The difference may be propagation noise for color separation.

The image processing method for use with an image processing apparatus of the present invention includes: an extraction step of extracting first to third light of the three primary colors, and fourth light having a high correlation with the second light among the first to third light of the three primary colors; a conversion step of converting the first to fourth light extracted in the process of the extraction step into corresponding first to fourth color signals; and a signal generation step of generating fifth to seventh color signals corresponding to the three primary colors on the basis of the first to fourth color signals, wherein the signal generation step generates the fifth to seventh color signals on the basis of a conversion equation provided to minimize the difference, at a predetermined evaluation value, between a reference value computed in accordance with a predetermined color patch and an output value computed by spectral sensitivity characteristics of the extraction means in accordance with the color patch.

The method of manufacturing an image processing apparatus of the present invention includes: a first step of providing conversion means; and a second step of producing, in front of the conversion means provided in the process of the first step, extraction means for extracting first to third light of the three primary colors, and fourth light having a high correlation with the second light among the first to third light of the three primary colors by determining spectral sensitivity characteristics using a predetermined evaluation coefficient.

In the second step, as the extraction means, a unit composed of first to fourth extraction sections for extracting the first to fourth light, respectively, may be formed, and the second extraction section and the fourth extraction section for extracting the second light and the fourth light, respectively, may be positioned diagonally at the unit.

The evaluation coefficient may be an evaluation coefficient for approximating the spectral sensitivity characteristics of the second extraction section and the fourth extraction section to visible sensitivity characteristics of a luminance signal.

The evaluation coefficient may be an evaluation coefficient in which noise reduction characteristics as well as color reproduction characteristics are considered.

In the second step, the first to third light of the three primary colors may be red, green, and blue light, respectively, and the fourth light may be green light.

The manufacturing method may further include a third step of producing generation means for generating fifth to seventh color signals corresponding to the three primary colors on the basis of the first to fourth color signals generated by converting the first to fourth light by the conversion means.

Brief Description of the Drawings

Fig. 1 shows an example of a conventional RGB color filter.
Fig. 2 is a block diagram showing an example of the configuration of a signal processing section provided in a conventional digital camera.
Fig. 3 shows an example of spectral sensitivity characteristics.
Fig. 4 shows another example of spectral sensitivity characteristics.
Fig. 5 shows still another example of spectral sensitivity characteristics.
Fig. 6 shows the spectral reflectances of predetermined objects.
Fig. 7A shows the tristimulus values when the predetermined objects is seen by the eyes of a standard observer.
Fig. 7B shows an example of the RGB values when the predetermined objects are photographed by a color filter.
Fig. 8 is a block diagram showing an example of the configuration of a digital camera to which the present invention is applied.
Fig. 9 shows an example of a four-color color filter provided in the digital camera of Fig. 8.
Fig. 10 shows an example of a visible sensitivity curve.
Fig. 11 shows features of evaluation coefficients.
Fig. 12 is a block diagram showing an example of the configuration of a camera system LSI of Fig. 8.
Fig. 13 is a block diagram showing an example of the configuration of a signal processing section of Fig. 12.
Fig. 14 is a flowchart illustrating a process for producing an image processing apparatus.
Fig. 15 is a flowchart illustrating details of a of Fig. 14.

Fig. 16 shows an example of a virtual curve.

Fig. 17A shows an example of the UMG values of filters in which RGB characteristics do not overlap one another.

Fig. 17B shows an example of the UMG values of filters in which R characteristics and G characteristics overlap each other over a wide wavelength band.

Fig. 17C shows an example of the UMG values of filters in which R, G, and B characteristics properly overlap one another.

Fig. 18 shows an example of the spectral sensitivity characteristics of the four-color color filter.

Fig. 19 is a flowchart illustrating details of a linear matrix determination process in step S2 of Fig. 14.

Fig. 20 shows an example of color-difference evaluation results.

Fig. 21 shows the chromaticity of predetermined objects by the four-color color filter.

Fig. 22 shows another example of the four-color color filter provided in the digital camera of Fig. 8.


Best Mode for Carrying Out the Invention

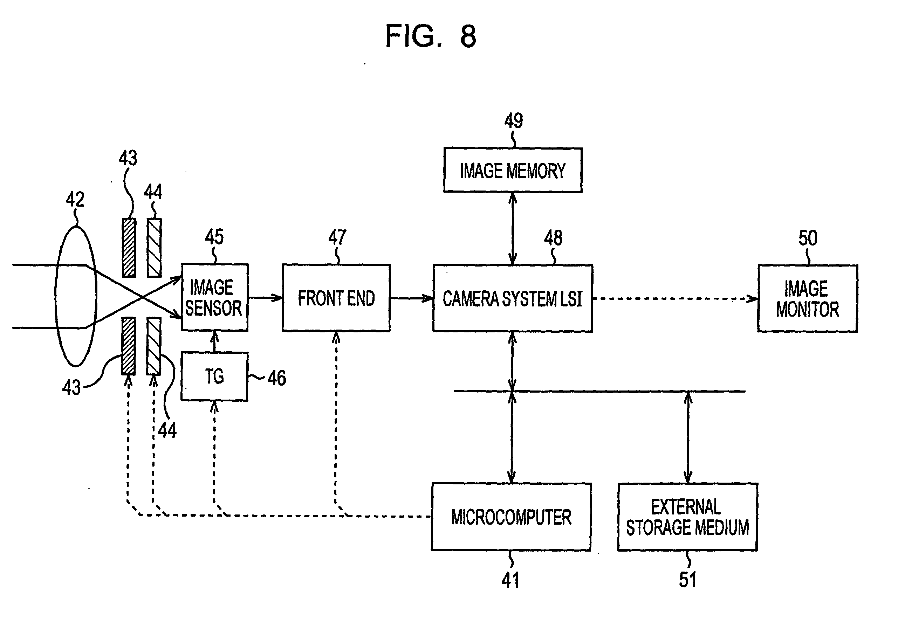

Fig. 8 is a block diagram showing an example of the configuration of a digital camera to which the present invention is applied.

In the digital camera shown in Fig. 8, color filters for identifying four kinds of colors (light) are provided in front of (in the plane opposing a lens 42) an image sensor 45 composed of a CCD (Charge Coupled Device) and the like.

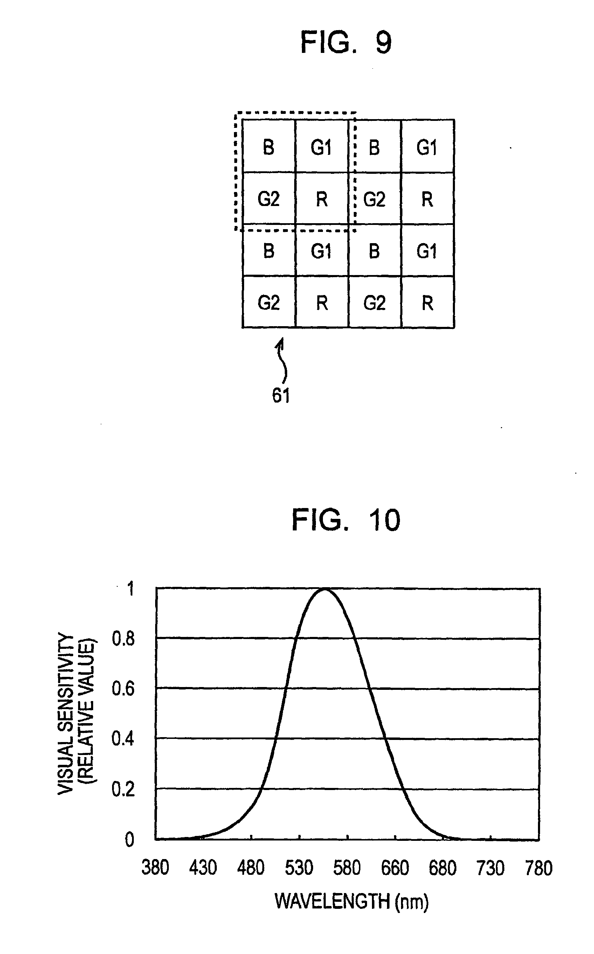

Fig. 9 shows an example of a four-color color filter 61 provided in the digital camera 45 of Fig. 8.

As indicated by the short dashed line in Fig. 9, the four-color color filter 61 is formed in such a way that a total of four filters, that is, an R filter that allows only red light to pass through, and a B filter that allows only blue light to pass through, a G1 filter that allows only green light in a first wavelength band to pass through, and a G2 filter that allows only green light in a second wavelength band to pass through, are set as a minimum unit. The G1 filter and the G2 filter are arranged at mutually diagonal positions within the minimum unit.

As will be described in detail later, by setting the number of types of colors of images obtained by the image sensor 45 to 4 so as to increase color information to be obtained, when compared to the case in which only three types of colors (RGB) are obtained, it is possible to represent colors more accurately, and the reproduction ("color discrimination characteristics") such that colors which are seen different to the eyes of a human being are reproduced as different colors and colors which are seen the same are reproduced as the same color can be improved.

As can be seen from the visible sensitivity curve shown in Fig. 10, the eyes of a human being are sensitive to the luminance. Therefore, in the example of the four-color color filter 61 of Fig. 9, a G2 color filter having spectral sensitivity characteristics close to the visible sensitivity curve is added (a newly determined green G2 color filter is added with respect to the R, G, and B filters corresponding to R, G, and B of Fig. 1) so that, by obtaining more accurate luminance information, the gradation of the luminance can be increased, and an image which is closer to the appearance to the eye can be reproduced.

As a filter evaluation coefficient used when the four-color color filter 61 is determined, for example, a UMG (Unified Measure of Goodness) in which both "color reproduction characteristics" and "noise reduction characteristics" are considered is used.

In the evaluation using UMG, merely the satisfaction of the Luther condition by the filter to be evaluated does not cause the evaluation value to be increased, and the overlap of the spectral sensitivity distribution of each filter is also taken into consideration. Therefore, when compared to the case of the color filter evaluated using a q factor, a $\mu$ factor, or an FOM, noise can be reduced even more. That is, as a result of the evaluation using an UMG, the spectral sensitivity characteristics have a certain degree of overlap. However, since a filter in which substantially all characteristics do not overlap like the R characteristics and the G characteristics of Fig. 4 is selected, even when each color signal is amplified for color separation, the amplification factor needs not to be increased by very much, and as a consequence, the amplification of noise components is suppressed.

The reason why noise is suppressed by the fourth filter (G2 filter) will be mentioned. As the cell size of CCDs is minimized to increase the number of pixels, the spectral sensitivity curves of the primary-color filters become thick in order to improve the sensitivity efficiency, and the overlap of the filters tends to increase. The addition of another filter under such circumstances has the effect of suppressing the original overlap of the three primary colors, with the result that noise is prevented.

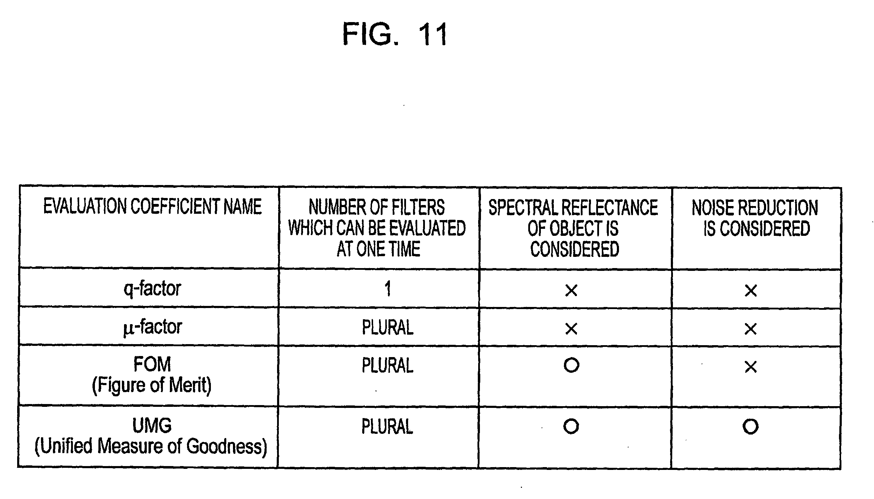

Fig. 11 shows features of evaluation coefficients of each filter. In Fig. 11, with respect to each evaluation coefficient, it is shown whether or not the number of filters which can be evaluated at one time and the spectral reflectance of the object are considered, and it is shown whether or not the reduction of noise is considered.

As shown in Fig. 11, for the q factor, the number of filters which can be evaluated at one time is only "1", and the spectral reflectance of the object and the reduction of noise are not considered. For the $\mu$ factor, although a plurality of filters can be evaluated at one time, the spectral reflectance of the object and the reduction of noise are not considered. Furthermore, for the FOM, although a plurality of filters can be evaluated at one time, and the spectral reflectance of the object is considered, the reduction of noise is not considered.

In comparison, for the UMG used when the four-color color filter 61 is determined, a plurality of filters can be evaluated at one time, the spectral reflectance of the object is considered, and the reduction of noise is considered.

The details of the q factor are disclosed in "H.E.J. Neugebauer "Quality Factor for Filters Whose Spectral Transmittances are Different from Color Mixture Curves, and Its Application to Color Photography" JOURNAL OF THE OPTICAL SOCIETY OF AMERICA, VOLUME 46, NUMBER 10". The details of the µ factor are disclosed in "P.L. Vora and H.J. Trussell, "Measure of Goodness of a set of color-scanning filters", JOURNAL OF THE OPTICAL SOCIETY OF AMERICA, VOLUME 10, NUMBER 7". The details of the FOM are disclosed in "G. Sharma and H.J. Trussell, "Figures of Merit for Color Scanners, IEEE TRANSACTION ON IMAGE PROCESSING, VOLUME 6". The details of the UMG are disclosed in "S. Quan, N. Ohta, and N. Katoh, "Optimal Design of Camera Spectral Sensitivity Functions Based on Practical Filter Components", CIC, 2001".

Referring back to Fig. 8, a microcomputer 41 controls the entire operation in accordance with a predetermined control program. For example, the microcomputer 41 performs exposure control using an aperture stop 43, open/close control of a shutter 44, electronic shutter control of a TG (Timing Generator) 46, gain control at a front end 47, mode control of a camera system LSI (Large Scale Integrated Circuit) 48, parameter control, and the like.

The aperture stop 43 adjusts the passage (aperture) of light collected by the lens 42 so as to control the amount of light received by an image sensor 45. The shutter 44 controls the passage of light collected by the lens 42 in accordance with instructions from the microcomputer 41.

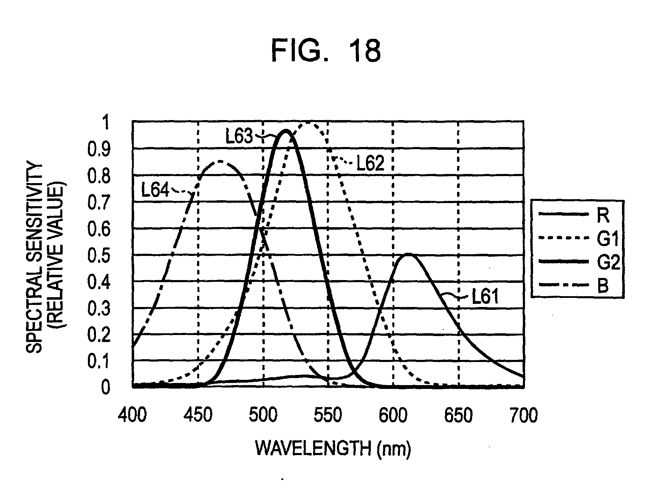

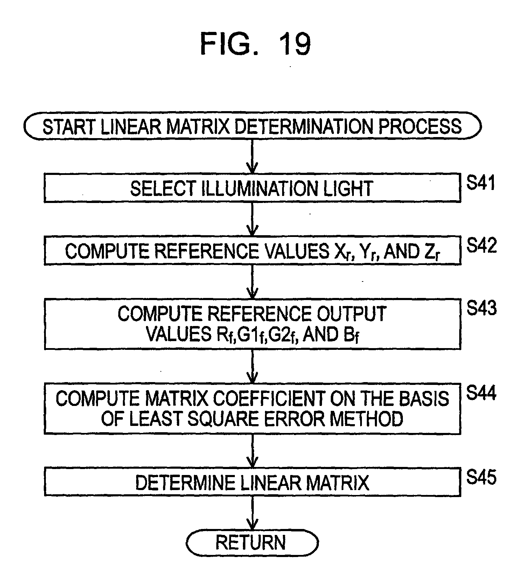

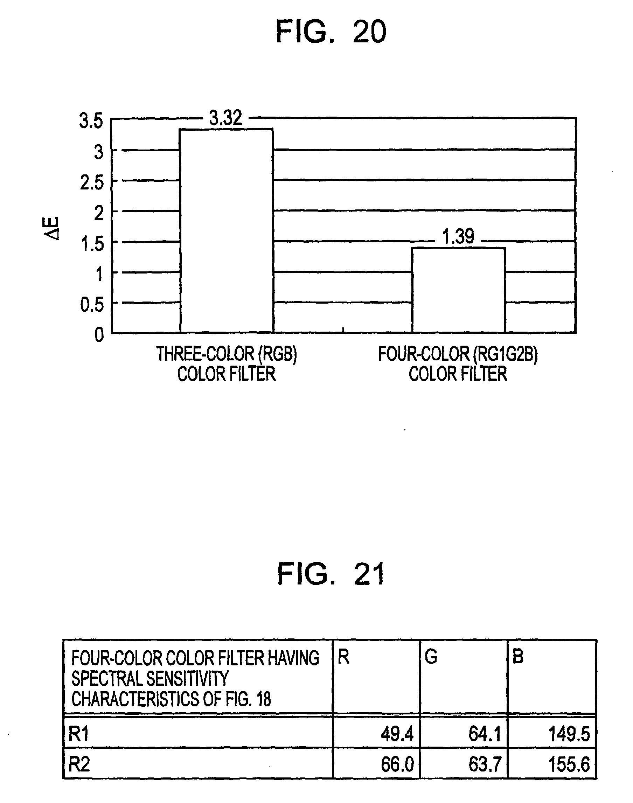

The image sensor 45 further includes an imaging device composed of a CCD and a CMOS (Complementary Metal Oxide Semiconductor). The image sensor 45 converts light which is input via the four-color color filter 61 formed in front of the imaging device into electrical signals, and outputs four types of color signals (R signal, G1 signal, G2 signal, and B signal) to the front end 47. The image sensor 45 is provided with the four-color color filter 61 of Fig. 9, so that wavelength components (the details will be described later with reference to Fig. 18) of the band of each of R, G1, G2, and B are extracted from the light which is input via the lens 42.

The front end 47 performs a correlation double sampling process for removing noise components, a gain control process, a digital conversion process, etc., on the color signal supplied from the image sensor 45. The image data obtained as a result of various processing being performed by the front end 47 is output to the camera system LSI 48.

As will be described in detail later, the camera system LSI 48 performs various processing on the image data supplied from the front end 47 in order to generate, for example, a luminance signal and color signals, outputs the color signals to an image monitor 50, whereby an image corresponding to the signals is displayed.

An image memory 49 is composed of, for example, DRAM (Dynamic Random Access Memory), SDRAM (Synchronous Dynamic Random Access Memory), and the like, and is used as appropriate when the camera system LSI 48 performs various processing. An external storage medium 51 formed by a semiconductor memory, a disk, etc., is configured in such a manner as to be loadable into the digital camera of Fig. 8, and image data compressed at a JPEG (Joint Photographic Expert Group) format by the camera system LSI 48 is stored therein.

The image monitor 50 is formed by, for example, an LCD (Liquid Crystal Display), and displays captured images, various menu screens, etc.

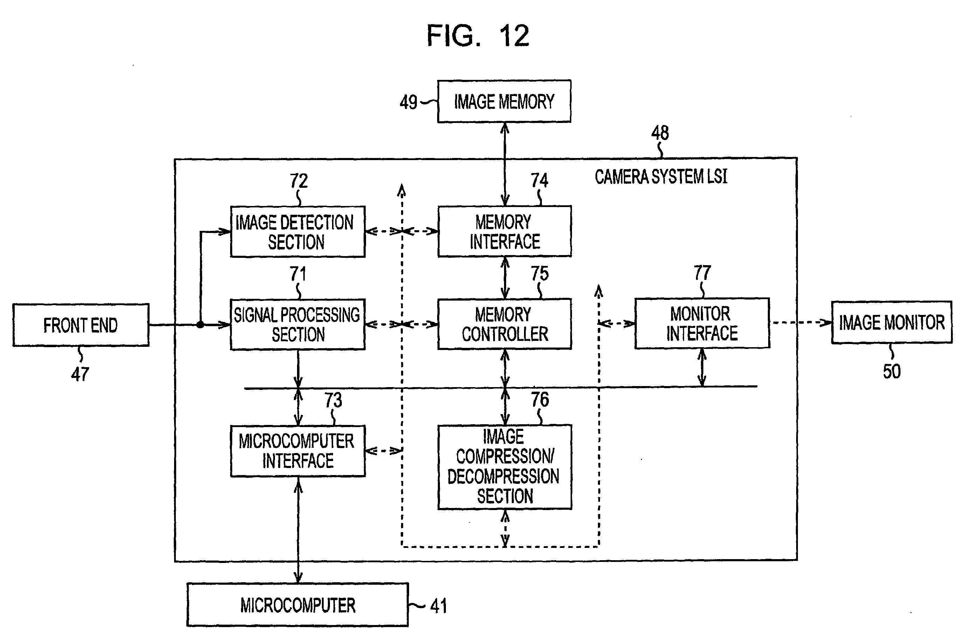

Fig. 12 is a block diagram showing an example of the configuration of the camera system LSI 48 of Fig. 8. Each block making up the camera system LSI 48 is controlled by the microcomputer 41 of Fig. 8 via a microcomputer interface (I/F) 73.

A signal processing section 71 performs various processing, such as an interpolation process, a filtering process, a matrix computation process, a luminance signal generation process, and a color-difference signal generation process, on four types of color information supplied from the front end 47, and, for example, outputs the generated image signals to the image monitor 50 via a monitor interface 77.

Based on the output from the front end 47, an image detection section 72 performs detection processing, such as autofocus, autoexposure, and auto white balance, and outputs the results to the microcomputer 41 as appropriate.

A memory controller 75 controls transmission and reception of data among the processing blocks or transmission and reception of data among predetermined processing blocks and the image memory 49, and, for example, outputs image data supplied from the signal processing section 71 via a memory interface 74 to the image memory 49, whereby the image data is stored.

An image compression/decompression section 76 compresses, for example, the image data supplied from the signal processing section 71 at a JPEG format, and outputs the obtained data via the microcomputer interface 73 to the external storage medium 51, whereby the image data is stored. The image compression/decompression section 76 further decompresses (expands) the compressed data read from the external storage medium 51 and outputs the data to the image monitor 50 via the monitor interface 77.

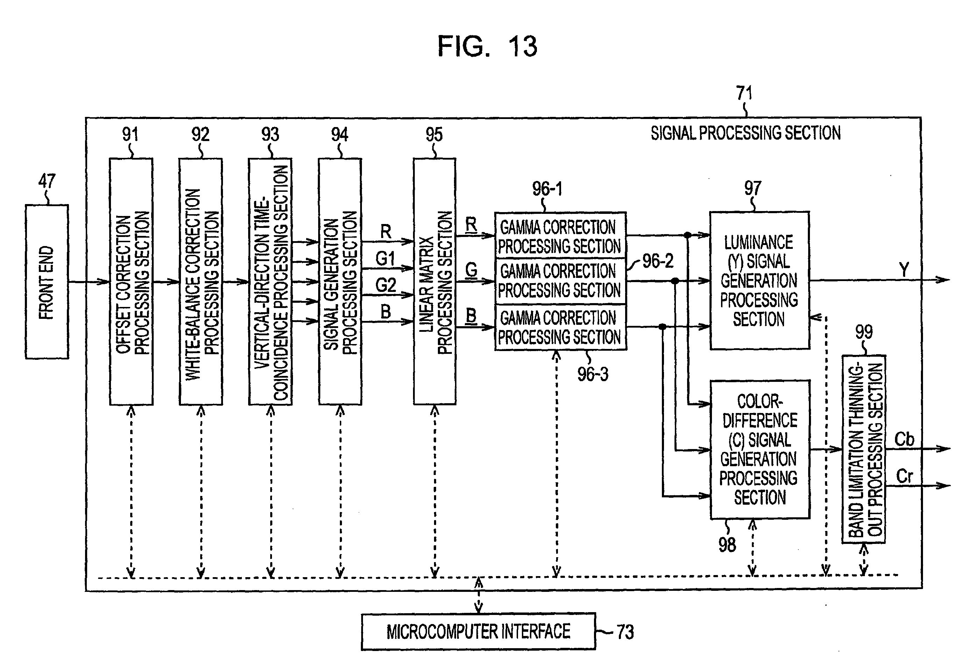

Fig. 13 is a block diagram showing an example of the detailed configuration of the signal processing section 71 of Fig. 12. Each block making up the signal processing section 71 is controlled by the microcomputer 41 via the microcomputer interface 73.

An offset correction processing section 91 removes noise components (offset components) contained in the image signal supplied from the front end 47, and outputs the obtained image signal to a white-balance correction processing section 92. The white-balance correction processing section 92 corrects the balance of each color on the basis of the color temperature of the image signal supplied from the offset correction processing section 91 and the difference in the sensitivity of each filter of the four-color color filter 61. The color signals obtained as a result of a correction being made by the white-balance correction processing section 92 are output to a vertical-direction time-coincidence processing section 93. The vertical-direction time-coincidence processing section 93 is provided with a delay device, so that signals having vertical deviations in time, which are supplied from the white-balance correction processing section 92, are made time coincident (corrected).

A signal generation processing section 94 performs an interpolation process for interpolating color signals of $2 \times 2$ pixels of the minimum unit of RG1G2B, which are supplied from the vertical-direction time-coincidence processing section 93, in the phase of the same space, a noise removal process for removing noise components of the signal, a filtering process for limiting the signal band, and a high-frequency correction process for correcting high-frequency components of the signal band, and outputs the obtained RG1G2B signals to the linear matrix processing section 95.

Based on predetermined matrix coefficients (a $3 \times 4$ matrix), the linear matrix processing section 95 performs a computation of the RG1G2B signals in accordance with the following equation (1), and generates the RGB signals of the three colors.

$$\begin{bmatrix} R \\ G \\ B \end{bmatrix} = \begin{bmatrix} a & b & c & d \\ e & f & g & h \\ i & j & k & l \end{bmatrix} \cdot \begin{bmatrix} R \\ G1 \\ G2 \\ B \end{bmatrix} \qquad \cdots (1)$$

The R signal generated by the linear matrix processing section 95 is output to a gamma correction processing section 96-1, the G signal is output to a gamma correction processing section 96-2, and the B signal is output to a gamma correction processing section 96-3.

The gamma correction processing sections 96-1 to 96-3 make a gamma correction on each of the RGB signals output from the linear matrix processing section 95, and output the obtained RGB signals to a luminance (Y) signal generation processing section 97 and a color-difference (C) generation processing section 98.

The luminance signal generation processing section 97 combines the RGB signals supplied from the gamma correction processing sections 96-1 to 96-3 at a predetermined combination ratio in accordance with the following equation (2), generating a luminance signal.

$$Y = 0.2126R + 0.7152G + 0.0722B \qquad (2)$$

The color-difference signal generation processing section 98 likewise combines the RGB signals supplied from the gamma correction processing sections 96-1 to 96-3 at a predetermined combination ratio, generating color-difference signals (Cb, Cr). The luminance signal generated by the luminance signal generation processing section 97 and the color-difference signals generated by the color-difference signal generation processing section 98 are, for example, output to the image monitor 50 via the monitor interface 77 of Fig. 12.

In the digital camera having the above-described configuration, when the capturing of an image is instructed, the microcomputer 41 controls the TG 46 so that an image is captured by the image sensor 45. That is, the four-color color filter 61 formed in front of the imaging device such as a CCD making up the image sensor 45 allows light of four colors to be transmitted therethrough, and the transmitted light is captured by the CCD imaging device. The light captured by the CCD imaging device is converted into four-color color signals, and the signals are output to the front end 47.

The front end 47 performs a correlation double sampling process for removing noise components, a gain control process, a digital conversion process, etc., on the color signals supplied from the image sensor 45, and outputs the obtained image data to the camera system LSI 48.

In the signal processing section 71 of the camera system LSI 48, offset components of the color signals are removed by the offset correction processing section 91, and the balance of each color is corrected by the white-balance correction processing section 92 on the basis of the color temperature of the image signal and the difference in the sensitivity of each filter of the four-color color filter 61.

Signals having vertical deviations in time, which are corrected by the white-balance correction processing section 92, are made time coincident (corrected) by the vertical-direction time-coincidence processing section 93. The signal generation processing section 94 performs an interpolation process for interpolating color signals of 2 × 2 pixels of the minimum unit of RG1G2B, which are supplied from the vertical-direction time-coincidence processing section 93, in the phase of the same space, a noise removal process for removing noise components of the signal, a filtering process for limiting the signal band, a high-frequency correction process for correcting high-frequency components of the signal band, and the like.

Furthermore, in the linear matrix processing section 95, the signal (RG1G2B signal) generated by the signal generation processing section 94 is converted in accordance with predetermined matrix coefficients (a 3 × 4 matrix), generating three color RGB signals. The R signal generated by the linear matrix processing section 95 is output to the gamma correction processing section 96-1, the G signal is output to the gamma correction processing section 96-2, and the B signal is output to the gamma correction processing section 96-3.

The gamma correction processing sections 96-1 to 96-3 make gamma correction on each of the RGB signals obtained by the processing of the linear matrix processing section 95. The obtained RGB signals are output to the luminance signal generation processing section 97 and the color-difference signal generation processing section 98. In the luminance signal generation processing section 97 and the color-difference signal generation processing section 98, the R signal, the G signal, and the B signal, which are supplied from the gamma correction processing sections 96-1 to 96-3, are combined at a predetermined combination ratio, generating a luminance signal and color-difference signals. The luminance signal generated by the luminance signal generation processing section 97 and the color-difference signals generated by the color-difference signal generation processing section 98 are output to the image compression/decompression section 76 of Fig. 12, whereby the signals are compressed, for example, at a JPEG format. The obtained compressed image data is output via the microcomputer interface 73 to the external storage medium 51, where the image data is stored.

As described above, since one piece of image data is formed on the basis of four kinds of color signals, the reproduction characteristics become closer to that which appears to the eyes of a human being.

On the other hand, when the playback (display) of the image data stored in the external storage medium 51 is instructed, the image data stored in the external storage medium 51 is read by the microcomputer 41, and the image data is output to the image compression/decompression section 76 of the camera system LSI 48. In the image compression/decompression section 76, the compressed image data is expanded, and an image corresponding to the data obtained via the monitor interface 77 is displayed on the image monitor 50.

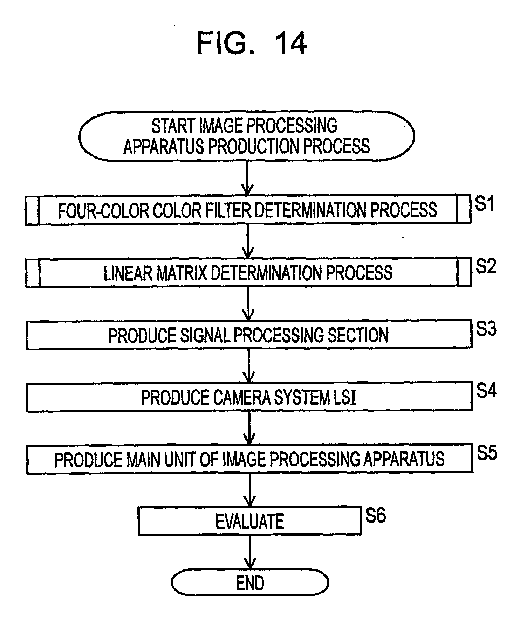

Next, referring to the flowchart in Fig. 14, a description will be given of a process (procedure) for producing a digital camera having the above configuration.

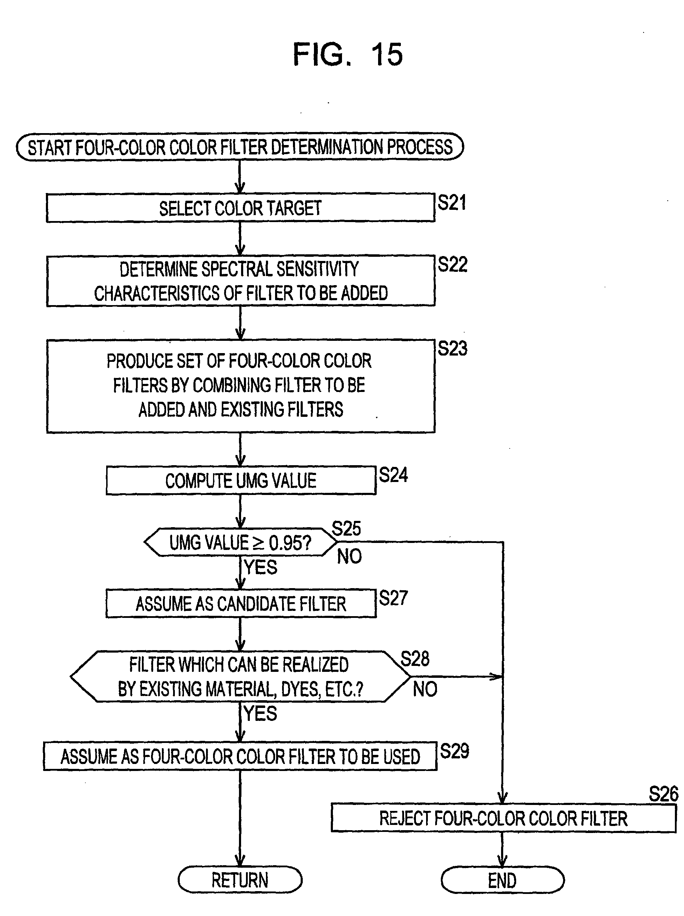

In step S1, a four-color color filter determination process for determining the spectral sensitivity characteristics of the four-color color filter 61 provided in the image sensor 45 of Fig. 8 is performed. In step S2, a linear matrix determination process for determining matrix coefficients to be set in the linear matrix processing section 95 of Fig. 13 is performed. The details of the four-color color filter determination process performed in step S1 will be described later with reference to the flowchart in Fig. 15. The details of the linear matrix determination process performed in step S2 will be described later with reference to the flowchart in Fig. 19.

After the four-color color filter 61 is determined and the matrix coefficients are determined, in step S3, the signal processing section 71 of Fig. 13 is produced, and the process proceeds to step S4, where the camera system LSI 48 of Fig. 12 is produced. Furthermore, in step S5, the whole of the image processing apparatus (digital camera) shown in Fig. 8 is produced. In step S6, the image quality ("color reproduction characteristics" and "color discrimination characteristics") of the digital camera produced in step S5 is evaluated, and the processing is then completed.

Here, object colors which are referred to when "color reproduction characteristics", "color discrimination characteristics", etc., are evaluated will now be described. The object colors are computed by the value such that the product of the "spectral reflectance of the object", the "spectral energy distribution of standard illumination", and the "spectral sensitivity distribution (characteristics) of a sensor (color filter) for sensing an object" is integrated in the range of the visible light region (for example, 400 to 700 nm). That is, the object colors are computed by the following equation (3).

$$\text{Object color} = k \int_{vis} \text{(Spectral reflectance of an object)} \cdot \text{(Spectral energy distribution}$$

$$\text{of illumination)} \cdot \text{(Spectral sensitivity distribution of a sensor for sensing an object)} \, d\lambda \qquad (3)$$

$\lambda$: Wavelength
vis: Visible light region (normally 400 nm to 700 nm)

For example, when a predetermined object is observed by the eye, the "spectral sensitivity distribution of the sensor" of equation (3) is represented by a color matching function, and the object colors of the object are represented by tristimulus values of X, Y, and Z. More specifically, the X value is computed by equation (4-1), the Y value is computed by equation (4-2), and the Z value is computed by equation (4-3). The value of the constant k in equations (4-1) to (4-3) is computed by equation (4-4).

$$X = k\int_{vis}R(\lambda)\cdot P(\lambda)\cdot \bar{x}(\lambda)d\lambda \qquad (4\text{-}1)$$

$$Y = k\int_{vis}R(\lambda)\cdot P(\lambda)\cdot \bar{y}(\lambda)d\lambda \qquad (4\text{-}2)$$

$$Z = k\int_{vis}R(\lambda)\cdot P(\lambda)\cdot \bar{z}(\lambda)d\lambda \qquad (4\text{-}3)$$

vis: Visible light region (normally 400 nm to 700 nm)
R ($\lambda$): Spectral reflectance of an object
$\bar{x}(\lambda),\bar{y}(\lambda),\bar{z}(\lambda)$: Color matching function

$$k = 1/\int P(\lambda)\cdot \bar{y}(\lambda)d\lambda \qquad (4\text{-}4)$$

When the image of the predetermined object is captured by the image processing apparatus such as a digital camera, the "spectral sensitivity characteristics of a sensor" of equation (3) above are represented by the spectral sensitivity characteristics of the color filter, and for the object colors of the object, the object colors of the color values of the number of filters (for example, the RGB values (three values) in the case of RGB filters (three kinds)) are computed. When the image processing apparatus is provided with RGB filters for detecting three kinds of colors, specifically, the R value is computed by equation (5-1), the G value is computed by equation (5-2), and the B value is computed by equation (5-3). Furthermore, the value of the constant $k_r$ in equation (5-1) is computed by equation (5-4), the value of the constant $k_g$ in equation (5-2) is computed by equation (5-5), and the value of the constant $k_b$ in equation (5-3) is computed by equation (5-6).

$$R = k_r\int_{vis}R(\lambda)\cdot P(\lambda)\cdot \bar{r}(\lambda)d\lambda \qquad (5\text{-}1)$$

$$G = k_g\int_{vis}R(\lambda)\cdot P(\lambda)\cdot \bar{g}(\lambda)d\lambda \qquad (5\text{-}2)$$

$$B = k_b\int_{vis}R(\lambda)\cdot P(\lambda)\cdot \bar{b}(\lambda)d\lambda \qquad (5\text{-}3)$$

vis: Visible light region (normally 400 nm to 700 nm)
R ($\lambda$): Spectral reflectance of an object
$\bar{r}(\lambda),\bar{g}(\lambda),\bar{b}(\lambda)$: Spectral sensitivity distribution of a color filter

$$k_r = 1/\int_{vis}P(\lambda)\cdot \bar{r}(\lambda)d\lambda \qquad (5\text{-}4)$$

$$k_g = 1/\int_{vis}P(\lambda)\cdot \bar{g}(\lambda)d\lambda \qquad (5\text{-}5)$$

$$k_b = 1/\int_{vis}P(\lambda)\cdot \bar{b}(\lambda)d\lambda \qquad (5\text{-}6)$$

Next, referring to the flowchart in Fig. 15, a description will be given of a four-color color filter determination process performed in step S1 of Fig. 14.
For determining the four-color color filter, there are various methods. A description is given below of an example of a process in which RGB filters are used as a basis (one of the existing G filters (of Fig. 1) is assumed as a G1 filter), a G2 filter for allowing a color having a high correlation with the color that is transmitted through the G1 filter is selected, and this filter is added to determine the four-color color filter.

In step S21, a color target used for computing the UMG values is selected. For example, in step S21, a color target containing a lot of color patches representing existing colors and containing a lot of color patches with importance placed on the memorized colors of a human being (skin color, green of plants, blue of the sky, etc.) is selected. Examples of the color target include IT8.7, a Macbeth color checker, a GretagMacbeth digital camera color checker, CIE, and a color bar.

Furthermore, depending on the purpose, a color patch that can be a standard may be created from the data, such as an SOCS (Standard Object Color Spectra Database), and it may be used. The details of the SOCS are disclosed in "Joji TAJIMA, "Statistical Color Reproduction Evaluation by Standard Object Color Spectra Database (SOCS)", Color Forum JAPAN 99". A description is given below of a case in which the Macbeth color checker is selected as a color target.

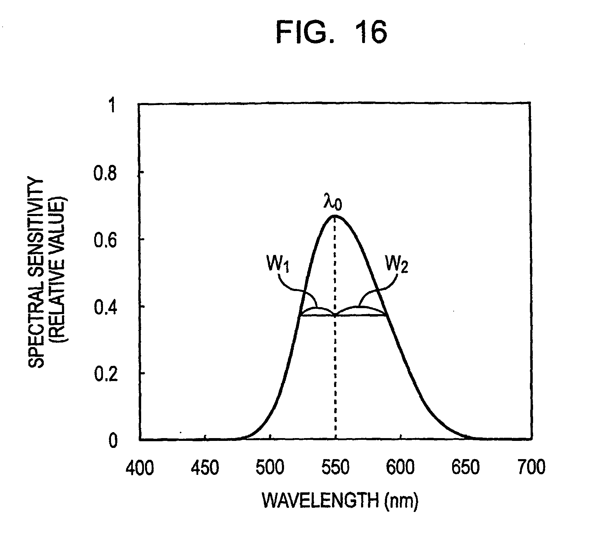

In step S22, the spectral sensitivity characteristics of the G2 filter are determined. Spectral sensitivity characteristics that can be created from existing materials may be used. Also, assuming a virtual curve $C(\lambda)$ by a cubic spline curve (three-order spline function) shown in Fig. 16, spectral sensitivity characteristics in which the peak value $\lambda_0$ of the virtual curve $C(\lambda)$, a value w (value such that the sum of $w_1$ and $w_2$ is divided by 2), and a value $\Delta w$ (value such that the value obtained by subtracting $w_2$ from $w_1$ is divided by 2) are changed in the range indicated in the figure may be used. The values of w and $\Delta w$ are set at values based on the half-width value. The way of changing $\lambda_0$, w, and $\Delta w$ is performed at the intervals of, for example, 5 nm. The virtual curve $C(\lambda)$ is expressed by the following equations (6-1) to (6-5) in each range.

$$C(\lambda) = \frac{w_2^3 + 3w_2^2(w_2 - |\lambda - \lambda_0|) + 3w_2(w_2 - |\lambda - \lambda_0|)^2 - 3(w_2 - |\lambda - \lambda_0|)^3}{6w_2^3}$$

$$\Lambda\ 0 \leqq \lambda - \lambda_0 \leqq w_2 \tag{6-1}$$

$$C(\lambda) = \frac{w_1^3 + 3w_1^2(w_1 - |\lambda - \lambda_0|) + 3w_1(w_1 - |\lambda - \lambda_0|)^2 - 3(w_1 - |\lambda - \lambda_0|)^3}{6w_1^3}$$

$$\Lambda\ -w_1 \leqq \lambda - \lambda_0 \leqq 0 \tag{6-2}$$

$$C(\lambda) = \frac{(2w_2 - |\lambda - \lambda_0|)^3}{6w_2^3}\ \Lambda\ w_2 \leqq \lambda - \lambda_0 \leqq 2w_2 \tag{6-3}$$

$$C(\lambda) = \frac{(2w_1 - |\lambda - \lambda_0|)^3}{6w_1^3}\ \Lambda\ -2w_1 \leqq \lambda - \lambda_0 \leqq -w_1 \tag{6-4}$$

$$C(\lambda) = 0\ \Lambda\ \text{Other than the above ranges} \tag{6-5}$$

In this example, only the filter G2 is added. Alternatively, only the R filter and the B filter of the filters (R, G, G, B) of Fig. 1 can be used, and the remaining G1 and G2 filters can be defined as virtual curves of equations (6-1) to (6-5) above in the vicinity of green color. Similarly, only the R and G filters, and the G and B filters from among the filters of Fig. 1 may be used. Furthermore, three colors of a four-color color filter can also be defined as virtual curves, or all the four colors can be defined as virtual curves.

In step S23, a filter to be added (G2 filter) and the existing filters (R filter, G1 filter, and B filter) are combined to create a minimum unit (set) of a four-color color filter. In step S24, an UMG is used as the filter evaluation coefficient with respect to the four-color color filter produced in step S23, and the UMG values is computed.

As described with reference to Fig. 11, when the UMG is used, an evaluation can be performed at one time with respect to the color filter of each of the four colors. Furthermore, not only is an evaluation performed by considering the spectral reflectance of the object, but also an evaluation is performed by considering the noise reduction characteristics. In the evaluation using the UMG, a high evaluation is indicated with respect to a filter having a proper overlap in the spectral sensitivity characteristics of each filter. Therefore, it can be prevented that a high evaluation is indicated with respect to a filter having characteristics such that the R characteristics and the G characteristics overlap over a wide wavelength band.

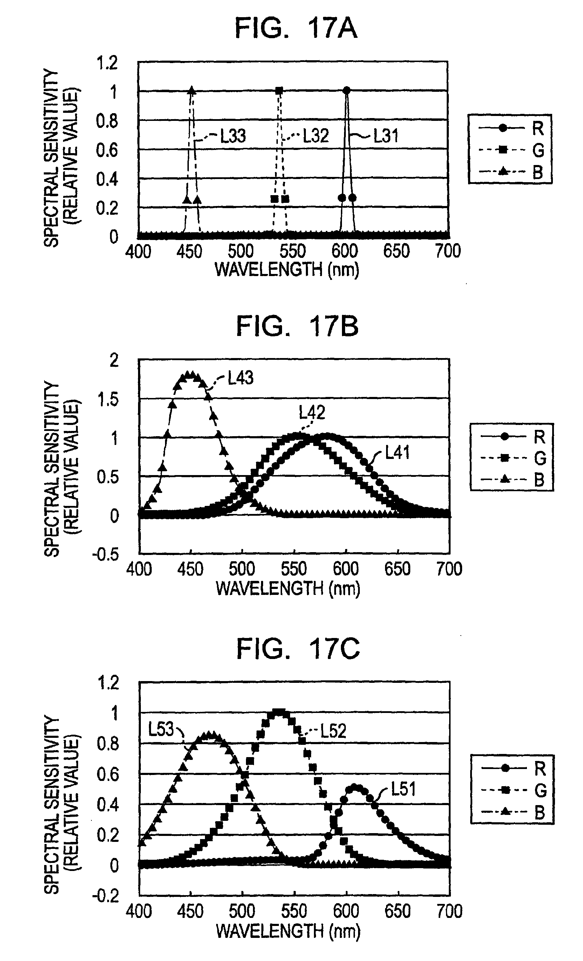

Figs. 17A to 17C show an example of UMG values computed in the three-color color filter. For example, in a filter having characteristics, shown in Fig. 17A, such that the RGB characteristics do not overlap one another, the UMG value of "0.7942" is computed. In a filter having characteristics, shown in Fig. 17B, such that the R characteristics and the G characteristics overlap over a wide wavelength band, the UMG value of "0.8211" is computed. In a filter having characteristics, shown in Fig. 17C, such that the RGB characteristics overlap properly, the UMG value of "0.8879" is computed. That is, the highest evaluation is indicated with respect to the filter having characteristics shown in Fig. 17C, in which the respective characteristics of RGB overlap properly. The same applies to the four-color color filter. A curve L31 of Fig. 17A, a curve L41 of Fig. 17B, and a curve L51 of Fig. 17C indicate the spectral sensitivity of R. A curve L32 of Fig. 17A, a curve L42 of Fig. 17B, and a curve L52 of Fig. 17C indicate the spectral sensitivity of G. A curve L33 of Fig. 17A, a curve L43 of Fig. 17B, and a curve L53 of Fig. 17C indicate the spectral sensitivity of B.

In step S25, it is determined whether or not the UMG value computed in step S24 is greater than or equal to "0.95", which is a predetermined threshold value. When it is determined that the UMG value is less than "0.95", the process proceeds to step S26, where the produced four-color color filter is rejected (not used). When the four-color color filter is rejected in step S26, the processing is thereafter terminated (processing of step S2 and subsequent steps of Fig. 14 is not performed).

On the other hand, when it is determined in step S25 that the UMG value computed in step S24 is greater than or equal to "0.95", in step S27, the four-color color filter is assumed as a candidate filter to be used in the digital camera.

In step S28, it is determined whether or not the four-color color filter which is assumed as a candidate filter in step S27 can be realized by existing materials and dyes. When materials, dyes, etc., are difficult to obtain, it is determined that the four-color color filter cannot be recognized, and the process proceeds to step S26, where the four-color color filter is rejected.

On the other hand, when it is determined in step S28 that the materials, dyes, etc., can be obtained and the four-color color filter can be realized, the process proceeds to step S29, where the produced four-color color filter is determined as a filter to be used in the digital camera. Thereafter, the processing of step S2 and subsequent steps of Fig. 14 is performed.

Fig. 18 shows an example of the spectral sensitivity characteristics of the four-color color filter determined in step S29.

In Fig. 18, a curve L61 indicates the spectral sensitivity characteristics of R, and a curve L62 indicates the spectral sensitivity characteristics of G1. A curve L63 indicates the spectral sensitivity of G2, and a curve L64 indicates the spectral sensitivity of B. As shown in Fig. 18, the spectral sensitivity curve (curve L63) of G2 has a high correlation with the spectral sensitivity curve (curve L62) of G1. The spectral sensitivity of R, the spectral sensitivity of G (G1, G2), and the spectral sensitivity of B overlap one another in a proper range. The characteristics shown in Fig. 18 are such that characteristics of G2 are added to the characteristics of the three-color color filter shown in Fig. 5.

As a result of using the four-color color filter determined in the above-described manner, in particular, the "color discrimination characteristics" among the "color reproduction characteristics" can be improved.

From the viewpoint of light use efficiency, in the manner described above, it is preferable that a filter having a high correlation with the G filter of the existing RGB filter be used as a filter (G2 filter) to be added. In this case, it is empirically preferable that the peak value of the spectral sensitivity curve of the filter to be added exist in the range of 495 to 535 nm (in the vicinity of the peak value of the spectral sensitivity curve of the existing G filter).

When a filter having a high correlation with the existing G filter is added, the four-color color filter can be produced by only using one of the two G filters which make up the minimum unit (R, G, G, B) of Fig. 1 as the filter of the color to be added. Therefore, no major changes needs to be added in the production steps.

When the four-color color filter is produced in the manner described above and it is provided in the digital camera, four types of color signals are supplied to the signal processing section 71 of Fig. 13 from the signal generation processing section 94. As a result, in the linear matrix processing section 95, a conversion process for generating signals of three colors (R, G, B) from the signals of four colors (R, G1, G2, B) is performed. Since this conversion process is a matrix process on a luminance-linear (the luminance value can be expressed by linear conversion) input signal value, the conversion process performed at the linear matrix processing section 95 will be hereinafter referred to as a "linear matrix process" where appropriate.

Next, referring to the flowchart in Fig. 19, a description will be given of a linear matrix determination process performed in step S2 of Fig. 14.

For the color target to be used in the processing of Fig. 19, the Macbeth color checker is used, and the four-color color filter to be used is assumed to have the spectral sensitivity characteristics shown in Fig. 18.

In step S41, for example, common daylight D65 (illumination light $L(\lambda)$), which is regarded as a standard light source in CIE (Commission Internationale del'Eclairange), is selected as illumination light. The illumination light may be changed to illumination light in an environment where the image processing apparatus is expected to be frequently used. When there are a plurality of illumination environments to be assumed, a plurality of linear matrixes may be provided. A description will now be given below of a case in which the daylight D65 is selected as illumination light.

In step S42, reference values Xr, Yr, and Zr are computed. More specifically, the reference value Xr is computed by equation (7-1), Yr is computed by equation (7-2), and Zr is computed by equation (7-3).

$$X_r = k\int_{vis} R(\lambda) \cdot L(\lambda) \cdot \bar{x}(\lambda) d\lambda \qquad (7\text{-}1)$$

$$Y_r = k\int_{vis} R(\lambda) \cdot L(\lambda) \cdot \bar{y}(\lambda) d\lambda \qquad (7\text{-}2)$$

$$Z_r = k\int_{vis} R(\lambda) \cdot L(\lambda) \cdot \bar{z}(\lambda) d\lambda \qquad (7\text{-}3)$$

vis: Visible light region (normally 400 nm to 700 nm)
$\bar{x}(\lambda), \bar{y}(\lambda), \bar{z}(\lambda)$: Color matching function

The constant k is computed by equation (8).

$$k = 1/\int_{vis} L(\lambda) \cdot y(\lambda) d\lambda \qquad (8)$$

For example, when the color target is a Macbeth color checker, reference values for 24 colors are computed.
Next, in step S43, the output values $R_f$, $G1_f$, $G2_f$, and $B_f$ of the four-color color filter are computed. More specifically, $R_f$ is computed by equation (9-1), $G1_f$ is computed by equation (9-2), $G2_f$ is computed by equation (9-3), and $B_f$ is computed by equation (9-4).

$$R_f = k_r \int_{vis} R(\lambda) \cdot L(\lambda) \cdot \bar{r}(\lambda) d\lambda \qquad (9\text{-}1)$$

$$G1_f = k_{g1} \int_{vis} R(\lambda) \cdot L(\lambda) \cdot \overline{g1}(\lambda) d\lambda \qquad (9\text{-}2)$$

$$G2_f = k_{g2} \int_{vis} R(\lambda) \cdot L(\lambda) \cdot \overline{g2}(\lambda) d\lambda \qquad (9\text{-}3)$$

$$B_f = k_b \int_{vis} R(\lambda) \cdot L(\lambda) \cdot \bar{b}(\lambda) d\lambda \qquad (9\text{-}4)$$

vis: Visible light region (normally 400 nm to 700 nm)
$\bar{r}(\lambda), \overline{g1}(\lambda), \overline{g2}(\lambda), \bar{b}(\lambda)$: Spectral sensitivity distribution of a color filter

The constant $k_r$ is computed by equation (10-1), the constant $k_{g1}$ is computed by equation (10-2), the constant $k_{g2}$ is computed by equation (10-3), and the constant $k_b$ is computed by equation (10-4).

$$k_r = 1/\int_{vis} L(\lambda) \cdot \bar{r}(\lambda) d\lambda \qquad (10\text{-}1)$$

$$k_{g1} = 1/\int_{vis} L(\lambda) \cdot \overline{g1}(\lambda) d\lambda \qquad (10\text{-}2)$$

$$k_{g2} = 1/\int_{vis} L(\lambda) \cdot \overline{g2}(\lambda) d\lambda \qquad (10\text{-}3)$$

$$k_b = 1/\int_{vis} L(\lambda) \cdot \bar{b}(\lambda) d\lambda \qquad (10\text{-}4)$$

For example, when the color target is a Macbeth color checker, reference values $R_f$, $G1_f$, $G2_f$, and $B_f$ for 24 colors are computed.

In step S44, a matrix used to perform a conversion for approximating the filter output value computed in step S43 to the reference value ($XYZ_{ref}$) computed in step S42 is computed by, for example, a least square error method in the XYZ color space.

For example, when a $3 \times 4$ matrix to be computed is assumed to be A expressed by equation (11), the matrix transform ($XYZ_{exp}$) is expressed by the following equation (12).

$$A = \begin{bmatrix} a0 & a1 & a2 & a3 \\ a4 & a5 & a6 & a7 \\ a8 & a9 & a10 & a11 \end{bmatrix} \qquad \cdots (11)$$

$$XYZ\ exp = \begin{bmatrix} \hat{X} \\ \hat{Y} \\ \hat{Z} \end{bmatrix} = \begin{bmatrix} a0 & a1 & a2 & a3 \\ a4 & a5 & a6 & a7 \\ a8 & a9 & a10 & a11 \end{bmatrix} \cdot \begin{bmatrix} R_f \\ G1_f \\ G2_f \\ B_f \end{bmatrix} \qquad \cdots (12)$$

The square of the error ($E^2$) of the matrix transform (equation (12)) with respect to a reference value is expressed by the following equation (13), and based on this equation, the matrix A for minimizing the matrix transform error with respect to the reference value is computed.

$$E^2 = |XYZref\text{-}XYZexp|^2 \qquad (13)$$

Furthermore, the color space used in the least square error method may be changed to that other than the XYZ color space. For example, by performing identical computations after the color space is converted into a Lab, Luv, or Lch color space which is uniform to the perception of a human being (uniform perceptual color space), a linear matrix that allows color reproduction with a small amount of perceptional error can be computed. Since the values of these color spaces are computed by a non-linear transform from the XYZ values, a non-linear calculation algorithm is used also in the least square error method.

As a result of the above-described computation, for example, a matrix coefficient for the filter having the spectral sensitivity characteristics shown in Fig. 18, which is represented by equation (14), is computed.

$$A = \begin{bmatrix} 0.476 & 0.905 & 0.261 & -0.691 \\ 0.2 & 1.154 & -0.061 & -0.292 \\ -0.004 & 0.148 & 0.148 & -0.481 \end{bmatrix} \qquad \cdots (14)$$

In step S45, a linear matrix is determined. For example, when the final RGB image data to be produced is represented by the following equation (15), the linear matrix (LinearM) is computed as shown below.

$$RGBout = [Ro, Go, Bo]^t \qquad (15)$$

That is, when illumination light is D65, a conversion equation for converting an sRGB color space into the XYZ color space is represented by equation (16) containing an ITU-R709.BT matrix, and equation (17) is computed by a reverse matrix of the ITU-R709.BT matrix.

$$\begin{bmatrix} X \\ Y \\ Z \end{bmatrix} = \begin{bmatrix} 0.4124 & 0.3576 & 0.1805 \\ 0.2126 & 0.7152 & 0.0722 \\ 0.0193 & 0.1192 & 0.9505 \end{bmatrix} \cdot \begin{bmatrix} R_{sRGB} \\ G_{sRGB} \\ B_{sRGB} \end{bmatrix} \qquad \cdots (16)$$

$$\begin{bmatrix} R_{sRGB} \\ G_{sRGB} \\ B_{sRGB} \end{bmatrix} = \begin{bmatrix} 3.2406 & -1.5372 & -0.4986 \\ -0.9689 & 1.8758 & 0.0415 \\ 0.0557 & -0.204 & 1.057 \end{bmatrix} \cdot \begin{bmatrix} X \\ Y \\ Z \end{bmatrix} \qquad \cdots (17)$$

Based on the matrix conversion equation of equation (12) and the reverse matrix of the ITU-R709.BT matrix of equation (15) and equation (17), equation (18) is computed. In the right side of equation (18), a linear matrix as the value in which the reverse matrix of the ITU-R709.BT matrix and the above-described matrix A are multiplied together is contained.

$$\begin{bmatrix} Ro \\ Go \\ Bo \end{bmatrix} = \begin{bmatrix} 3.2406 & -1.5372 & -0.4986 \\ -0.9689 & 1.8758 & 0.0415 \\ 0.0557 & -0.204 & 1.057 \end{bmatrix} \cdot \begin{bmatrix} a0 & a1 & a2 & a3 \\ a4 & a5 & a6 & a7 \\ a8 & a9 & a10 & a11 \end{bmatrix} \cdot \begin{bmatrix} R_f \\ G1_f \\ G2_f \\ B_f \end{bmatrix}$$

$$\cdots (18)$$

That is, the 3 × 4 linear matrix (LinearM) is represented by equation (19-1), and the linear matrix for the four-color color filter having the spectral sensitivity characteristics of Fig. 18, in which, for example, the matrix coefficient of equation (14) is used, is represented by equation (19-2).

$$LinearM = \begin{bmatrix} l0 & l1 & l2 & l3 \\ l4 & l5 & l6 & l7 \\ l8 & l9 & l10 & l11 \end{bmatrix}$$

$$= \begin{bmatrix} 3.2406 & -1.5372 & -0.4986 \\ -0.9689 & 1.8758 & 0.0415 \\ 0.0557 & -0.204 & 1.057 \end{bmatrix} \cdot \begin{bmatrix} a0 & a1 & a2 & a3 \\ a4 & a5 & a6 & a7 \\ a8 & a9 & a10 & a11 \end{bmatrix}$$

$$\cdots (19-1)$$

$$LinearM = \begin{bmatrix} 1.238 & 1.084 & 0.228 & -1.55 \\ -0.087 & 1.295 & -0.309 & 0.101 \\ -0.018 & -0.029 & 1.535 & -0.485 \end{bmatrix} \qquad \cdots (19-2)$$

The linear matrix computed in the above-described manner is provided to the linear matrix processing section 95 of Fig. 13. As a result, since a matrix process can be performed on the signals (R, G1, G2, B) capable of representing the luminance by a linear transform, when compared to the case in which a matrix process is performed on the signals obtained after gamma processing is performed as in the process in the signal processing section 11 shown in Fig. 2, a more faithful color can be reproduced in terms of color dynamics.

Next, a description is given of an evaluation performed in step S6 of Fig. 14.

When a comparison is made, for example, between the color reproduction characteristics of the image processing apparatus (the digital camera of Fig. 8) provided with the four-color color filter having the spectral sensitivity characteristics of Fig. 18 and the color reproduction characteristics of the image processing apparatus provided with the three-color color filter shown in Fig. 1, which are produced in the above-described manner, the following differences appear.

For example, the color difference in the Lab color space between the output value when a Macbeth chart is photographed by each of two kinds of image processing apparatus (a digital camera provided with a four-color color filter, and a digital camera provided with a three-color color filter) and the reference value is computed by the following equation (20).

$$\Delta E = \sqrt{(L_1\text{-}L_2)^2 + (a_1\text{-}a_2)^2 + (b_1\text{-}b_2)^2} \qquad (20)$$

where $L_1$ - $L_2$ indicates the lightness difference between two samples, and $a_1$ - $a_2$ and $b_1$ - $b_2$ indicate the component difference of hue/chromaticity between two samples.

Fig. 20 shows computation results by equation (20). As shown in Fig. 20, whereas the color difference is "3.32" in the case of the digital camera provided with a three-color color filter, the color difference in the case of the digital camera provided with a four-color color filter is "1.39". Thus, the "appearance of the color" is superior for the digital camera provided with a four-color color filter (the color difference is smaller).

Fig. 21 shows the RGB values when the object R1 and the object R2 having the spectral reflectance of Fig. 6 are photographed by the digital camera provided with a four-color color filter.

In Fig. 21, the R value of the object R1 is set at "49.4", the G value is set at "64.1", and the B values is set at "149.5". The R value of the object R2 is set at "66.0", the G value is set at "63.7", and the B value is set at "155.6". Therefore, as described above, when an image is captured by the three-color color filter, the RGB values are as shown in Fig. 7B, and the colors of each object are not identified. In contrast, in the four-color color filter, the RGB values of the object R1 differ from the RGB values of the object R2, and similarly to the case in which the object is viewed with the eye (Fig. 7A), the fact that the colors of each object are identified is shown in Fig. 21. That is, as a result of providing a filter capable of identifying four kinds of colors, the "color discrimination characteristics" are improved.

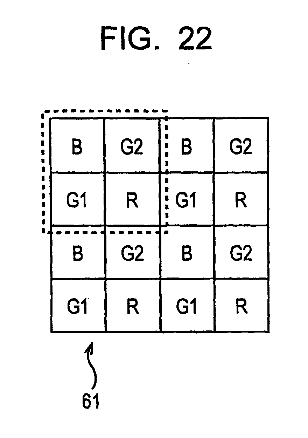

In the foregoing, as shown in Fig. 9, the four-color color filter 61 is arranged by a layout in which B filters are provided to the left and right of the G1 filter, and R filters are provided to the left and right of the G2 filter. Alternatively, the four-color color filter 61 may be arranged by a layout shown in Fig. 22. In the four-color color filter 61 shown in Fig. 22, R filters are provided to the left and right of the G1 filter, and B filters are provided to the left and right of the G2 filter. Also, with such an arrangement of the four-color color filter 61, similarly to that shown in Fig. 9, the "color discrimination characteristics", the "color reproduction characteristics", and the "noise reduction characteristics" can be improved.

Industrial Applicability

According to the present invention, captured colors can be reproduced faithfully.

Furthermore, according to the present invention, the "color discrimination characteristics" can be improved.

In addition, according to the present invention, the "color reproduction characteristics" and the "noise reduction characteristics" can be improved.

According to the present invention, the "appearance of the color" can be improved.

**Claims**

**1.** An image processing apparatus comprising:

extraction means for extracting first to third light of the three primary colors, and fourth light having a high correlation with said second light among said first to third light of said three primary colors;

conversion means for converting said first to fourth light extracted by said extraction means into corresponding first to fourth color signals; and

signal generation means for generating fifth to seventh color signals corresponding to said three primary colors on the basis of said first to fourth color signals,

wherein said signal generation means generates said fifth to seventh color signals on the basis of a conversion equation provided to minimize the difference, at a predetermined evaluation value, between a reference value computed in accordance with a predetermined color patch and an output value computed by spectral sensitivity characteristics of said extraction means in accordance with said color patch.

2. The image processing apparatus according to Claim 1, wherein said extraction means for extracting said first to fourth light has a unit composed of first to fourth extraction sections for extracting said first to fourth light, respectively, and said second extraction section and said fourth extraction section for extracting said second light and said fourth light, respectively, are positioned diagonally at said unit.

3. The image processing apparatus according to Claim 2, wherein said second extraction section and said fourth extraction section have spectral sensitivity characteristics which closely resemble visible sensitivity characteristics of a luminance signal.

4. The image processing apparatus according to Claim 1, wherein said first to third light of said three primary colors are red, green, and blue light, respectively, and said fourth light is green light.

5. The image processing apparatus according to Claim 1, wherein said difference is a difference in an XYZ color space.

6. The image processing apparatus according to Claim 1, wherein said difference is a difference in a uniform perceptual color space.

7. The image processing apparatus according to Claim 1, wherein said difference is propagation noise for color separation.

8. An image processing method for use with an image processing apparatus, said image processing method comprising:

an extraction step of extracting first to third light of the three primary colors, and fourth light having a high correlation with said second light among said first to third light of said three primary colors;
a conversion step of converting said first to fourth light extracted in the process of said extraction step into corresponding first to fourth color signals; and
a signal generation step of generating fifth to seventh color signals corresponding to said three primary colors on the basis of said first to fourth color signals,

wherein said signal generation step generates said fifth to seventh color signals on the basis of a conversion equation provided to minimize the difference, at a predetermined evaluation value, between a reference value computed in accordance with a predetermined color patch and an output value computed by spectral sensitivity characteristics of said extraction means in accordance with said color patch.

9. A method of manufacturing an image processing apparatus comprising:

extraction means for extracting predetermined color components from incident light; and
conversion means for converting light of color components extracted by said extraction means into corresponding color signals, said manufacturing method comprising the steps of:

a first step of providing said conversion means; and
a second step of producing, in front of said conversion means provided in the process of said first step, extraction means for extracting first to third light of the three primary colors, and fourth light having a high correlation with said second light among said first to third light of said three primary colors by determining spectral sensitivity characteristics using a predetermined evaluation coefficient.

10. The manufacturing method according to Claim 9, wherein, in said second step, a unit composed of first to fourth extraction sections, as said extraction mean, for extracting said first to fourth light, respectively, is formed, and said second extraction section and said fourth extraction section for extracting said second light and said fourth light, respectively, are positioned diagonally at said unit.

11. The manufacturing method according to Claim 9, wherein said evaluation coefficient is an evaluation coefficient for approximating the spectral sensitivity characteristics of said second extraction section and said fourth extraction section to visible sensitivity characteristics of a luminance signal.

12. The manufacturing method according to Claim 11, wherein said evaluation coefficient is an evaluation coefficient in which noise reduction characteristics as well as color reproduction characteristics are considered.

13. The manufacturing method according to Claim 9, wherein, in said second step, the first to third light of said three primary colors are red, green, and blue light, respectively, and said fourth light is green light.

14. The manufacturing method according to Claim 9, further comprising a third step of producing generation means for generating fifth to seventh color signals corresponding to said three primary colors on the basis of the first to fourth color signals generated by converting said first to fourth light by said conversion means.

# FIG. 1

FIG. 2

SIGNAL PROCESSING SECTION

FRONT END

OFFSET CORRECTION PROCESSING SECTION

WHITE-BALANCE CORRECTION PROCESSING SECTION

GAMMA CORRECTION PROCESSING SECTION

VERTICAL-DIRECTION TIME-COINCIDENCE PROCESSING SECTION

RGB SIGNAL GENERATION PROCESSING SECTION

LUMINANCE (Y) SIGNAL GENERATION PROCESSING SECTION

COLOR-DIFFERENCE (C) SIGNAL GENERATION PROCESSING SECTION

BAND LIMITATION THINNING-OUT PROCESSING SECTION

MICROCOMPUTER INTERFACE

R G B

Y Cb Cr

11 13 21 22 23 24 25 26 27 28 12

# FIG. 3

# FIG. 4

## FIG. 5

## FIG. 6

# FIG. 7A

| FOR EYES | X | Y | Z |
|---|---|---|---|
| R1 | 0.08 | 0.06 | 0.30 |
| R2 | 0.10 | 0.07 | 0.33 |

# FIG. 7B

| RGB COLOR FILTER HAVING SPECTRAL SENSITIVITY CHARACTERISTICS OF FIG. 5 | R | G | B |
|---|---|---|---|
| R1 | 66.5 | 83.3 | 132.0 |
| R2 | 66.5 | 83.3 | 132.0 |

FIG. 8

# FIG. 9

61

# FIG. 10

# FIG. 11

| EVALUATION COEFFICIENT NAME | NUMBER OF FILTERS WHICH CAN BE EVALUATED AT ONE TIME | SPECTRAL REFLECTANCE OF OBJECT IS CONSIDERED | NOISE REDUCTION IS CONSIDERED |
|---|---|---|---|
| q-factor | 1 | × | × |
| $\mu$-factor | PLURAL | × | × |
| FOM (Figure of Merit) | PLURAL | O | × |
| UMG (Unified Measure of Goodness) | PLURAL | O | O |

EP 1 487 219 A1

# FIG. 12

49 — IMAGE MEMORY

48

CAMERA SYSTEM LSI

72 — IMAGE DETECTION SECTION

74 — MEMORY INTERFACE

71 — SIGNAL PROCESSING SECTION

75 — MEMORY CONTROLLER

77 — MONITOR INTERFACE

FRONT END

47

73 — MICROCOMPUTER INTERFACE

76 — IMAGE COMPRESSION/ DECOMPRESSION SECTION

IMAGE MONITOR

50

MICROCOMPUTER — 41

EP 1 487 219 A1

**FIG. 13**

# FIG. 14

```
        START IMAGE PROCESSING
      APPARATUS PRODUCTION PROCESS
                    │
                    ▼
   FOUR-COLOR COLOR FILTER DETERMINATION PROCESS    S1
                    │
                    ▼
      LINEAR MATRIX DETERMINATION PROCESS           S2
                    │
                    ▼
      PRODUCE SIGNAL PROCESSING SECTION             S3
                    │
                    ▼
         PRODUCE CAMERA SYSTEM LSI                  S4
                    │
                    ▼
  PRODUCE MAIN UNIT OF IMAGE PROCESSING APPARATUS   S5
                    │
                    ▼
              EVALUATE                              S6
                    │
                    ▼
                  END
```

# FIG. 15

```
( START FOUR-COLOR COLOR FILTER DETERMINATION PROCESS )
                            │
                            ▼
        ┌───────────────────────────────────────┐  S21
        │          SELECT COLOR TARGET          │
        └───────────────────────────────────────┘
                            │
                            ▼
        ┌───────────────────────────────────────┐  S22
        │       DETERMINE SPECTRAL SENSITIVITY   │
        │    CHARACTERISTICS OF FILTER TO BE ADDED│
        └───────────────────────────────────────┘
                            │
                            ▼
        ┌───────────────────────────────────────┐  S23
        │        PRODUCE SET OF FOUR-COLOR COLOR │
        │        FILTERS BY COMBINING FILTER TO BE│
        │        ADDED AND EXISTING FILTERS      │
        └───────────────────────────────────────┘
                            │
                            ▼
           ┌──────────────────────────┐  S24
           │     COMPUTE UMG VALUE    │
           └──────────────────────────┘
                            │
                            ▼
            < UMG VALUE ≥ 0.95? >  S25 ──── NO ───────────┐
                       │                                   │
                      YES                                  │
                       ▼                                   │
           ┌──────────────────────────┐  S27             │
           │  ASSUME AS CANDIDATE FILTER│                 │
           └──────────────────────────┘                  │
                       │                                   │
                       ▼                                   │
        < FILTER WHICH CAN BE REALIZED >  S28 ── NO ──────┤
        < BY EXISTING MATERIAL, DYES, ETC.? >             │
                       │                                   │
                      YES                                  │
                       ▼                                   │
  ┌──────────────────────────────────────────────┐  S29   │
  │ ASSUME AS FOUR-COLOR COLOR FILTER TO BE USED │        │
  └──────────────────────────────────────────────┘        │
                       │                                   ▼
                       │              ┌──────────────────────────────────┐  S26
                       │              │   REJECT FOUR-COLOR COLOR FILTER │
                       │              └──────────────────────────────────┘
                       ▼                                   │
                 ( RETURN )                          ( END )
```

FIG. 16

# FIG. 17A

# FIG. 17B

# FIG. 17C

FIG. 18

# FIG. 19

START LINEAR MATRIX DETERMINATION PROCESS

| SELECT ILLUMINATION LIGHT | S41 |

| COMPUTE REFERENCE VALUES $X_r$, $Y_r$, AND $Z_r$ | S42 |

| COMPUTE REFERENCE OUTPUT VALUES $R_f$, $G1_f$, $G2_f$, AND $B_f$ | S43 |

| COMPUTE MATRIX COEFFICIENT ON THE BASIS OF LEAST SQUARE ERROR METHOD | S44 |

| DETERMINE LINEAR MATRIX | S45 |

RETURN

# FIG. 20

3.5 — 3.32
3
2.5
2
ΔE 1.5 — 1.39
1
0.5
0

THREE-COLOR (RGB)  FOUR-COLOR (RG1G2B)
COLOR FILTER  COLOR FILTER

# FIG. 21

| FOUR-COLOR COLOR FILTER HAVING SPECTRAL SENSITIVITY CHARACTERISTICS OF FIG. 18 | R | G | B |
|---|---|---|---|
| R1 | 49.4 | 64.1 | 149.5 |
| R2 | 66.0 | 63.7 | 155.6 |

# FIG. 22

61

## INTERNATIONAL SEARCH REPORT

| International application No. |
| --- |
| PCT/JP03/02101 |

| A. CLASSIFICATION OF SUBJECT MATTER |
| --- |
| Int.Cl⁷ H04N9/07 |

According to International Patent Classification (IPC) or to both national classification and IPC

| B. FIELDS SEARCHED |
| --- |
| Minimum documentation searched (classification system followed by classification symbols)<br>Int.Cl⁷ H04N9/04-9/11 |

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y<br>A | JP 3-174890 A (Fuji Photo Film Co., Ltd.),<br>30 July, 1991 (30.07.91),<br>Full text; all drawings<br>& US 5063439 A1 | 1–8<br>9–14 |
| Y<br>A | JP 7-123434 A (Nippon Hoso Kyokai),<br>12 May, 1995 (12.05.95),<br>Full text; all drawings<br>(Family: none) | 1–8<br>9–14 |
| E,X<br>E,A | JP 2002-271804 A (Fuji Photo Film Co., Ltd.),<br>20 September, 2002 (20.09.02),<br>Full text; all drawings<br>(Family: none) | 9–12,14<br>1–8,13 |

☐ Further documents are listed in the continuation of Box C.  ☐ See patent family annex.

| | |
| --- | --- |
| *  Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>03 June, 2003 (03.06.03) | Date of mailing of the international search report<br>24 June, 2003 (24.06.03) |
| --- | --- |
| Name and mailing address of the ISA/<br>Japanese Patent Office | Authorized officer |
| Facsimile No. | Telephone No. |

Form PCT/ISA/210 (second sheet) (July 1998)